# EUROPÄISCHE PATENTSCHRIFT

(11) **EP 3 702 172 B1**
(45) Veröffentlichungstag und Bekanntmachung des Hinweises auf die Patenterteilung: **20.04.2022**
(21) Anmeldenummer: 19160259.8
(22) Anmeldetag: 01.03.2019
(51) Int. Cl.: B44B 5/00, B44C 1/24, B44C 5/04, B29C 59/02, B29C 59/04, B29C 70/58

(54) **VERFAHREN ZUR HERSTELLUNG EINES MEHRSCHICHTIGEN, OBERFLÄCHENSTRUKTURIERTEN PANEELS UND EIN MIT DIESEM VERFAHREN HERGESTELLTES PANEEL**
METHOD FOR PRODUCING A MULTILAYER STRUCTURED PANEL AND PANEL MANUFACTURED BY MEANS OF THIS METHOD
PROCÉDÉ DE FABRICATION D'UN PANNEAU STRUCTURÉ EN SURFACE MULTICOUCHES ET PANNEAU FABRIQUÉ SELON LEDIT PROCÉDÉ

(43) Veröffentlichungstag der Anmeldung: 02.09.2020
(73) Patentinhaber: Flooring Technologies Ltd., Kalkara SCM1001 (MT)
(72) Erfinder: Oldorff, Frank, 19057 Schwerin (DE)
(74) Vertreter: Maikowski & Ninnemann Patentanwälte Partnerschaft mbB

(56) Entgegenhaltungen:
- EP-A1- 2 700 508
- EP-A1- 3 338 993
- WO-A1-2007/042258
- US-A1- 2004 086 678
- US-B2- 8 955 281

## Beschreibung

Die vorliegende Erfindung betrifft ein Verfahren zur Herstellung eines mehrschichtigen, oberflächenstrukturierten Paneels und ein mit diesem Verfahren hergestelltes Paneel.

### Beschreibung

Als Fußbodenbeläge werden derzeit hauptsächlich Keramikfliesen, Holzbeläge (wie Parkettböden), Laminat, PVC-Beläge aber auch textile Auslegware (wie Teppiche) verwendet. Fußbodenbeläge aus PVC werden häufig im öffentlichen und kommerziellen Orten, aber auch im Heimbereich aufgrund der widerstandsfähigen Eigenschaften, des leichten Einbaus und günstigen Kosten bevorzugt.

Bodenbeläge auf der Basis von PVC werden in mehrere Kategorien und Unterkategorien eingeteilt. Hierbei unterscheidet man insbesondere zwischen traditionellen PVC- Belägen und den sogenannten LVT (Luxury Vinyl Tile) - Belägen.

Traditionelle PVC-Beläge verwenden im wesentlichen PVC als Basismaterial mit Weichmachern, wodurch ein flexibles Produkt erhalten wird, dass in einfacher Weise bedruckt und auf einen Boden gelegt werden kann. Traditionelle PVC-Produkte gehören zu den kostengünstigsten Fußboden-Belägen, die derzeit erhältlich sind.

Die LVT-Produkte umfassen u.a. PVC-Beläge und mehrschichtige Fußbodenbeläge, die einen harten Kern aufweisen und wiederum in zwei Klassen unterschieden werden. Dazu gehören zum einen die WPC-Produkte (WPC = wood plastic composites or waterproof plastic composites), die ursprünglich als Kernlage eine Schicht aus einer Holz-Kunststoff-Mischung umfassen. Neben dem Einsatz von Holz zur Kostenreduzierung kann auch das Aufschäumen des Trägers eine Alternative darstellen.

Zum anderen gehören zu den mehrschichtigen PVC-Fußbodenbelägen die SPC-Beläge, dessen Kernlage aus einem Kunststoffanteil (meist PVC) und einem größeren Anteil an Mineralien besteht. Aufgrund des größeren Mineralanteils ist die Steifheit, das Gewicht und die Dichte höher.

Die Herstellung von SPC-Bodenbelägen (SPC = stone plastic composite) nimmt in den letzten Jahren mengenmäßig stark zu. Dabei besteht das Produkt im einfachsten Fall aus einem Träger, einer Dekorschicht und einer Verschleißschicht.

So beschreibt die US 2004/0086678 A1 eine strukturierte und mit einem Dekor versehene Trägerplatte, wobei die Trägerplatte in Form eines strukturierten thermoplastischen Polymerkerns vorliegen kann. EP 2700508 A1 betrifft ein Verfahren zum Bedrucken eines Wand-oder Bodenpaneels, wobei das Paneel aus einer Trägerplatte aus thermoplastischen Kunststoffen wie PVC oder Polypropylen besteht, wobei die Trägerplatte eingefärbt sein kann. WO 2007/042258 A1 beschreibt die Herstellung einer abriebfesten Platte mit dekorativer Oberfläche. In einer Ausführungsform wird zunächst ein Grundlack auf die Platte aufgetragen. Anschließend werden die abriebfesten Partikel auf den noch nassen Grundlack aufgestreut. Danach wird ein Decklack auf den nassen Grundlack mit den aufgestreuten abriebfesten Partikeln aufgetragen. Grundlack und Decklack werden dann gemeinsam gehärtet

Der Träger besteht aus einem hochgefüllten thermoplastischen Kunststoff, wie Polyvinylchlorid oder Polypropylen, wobei als Füllstoffe üblicherweise Kreide oder Talkum verwendet werden. Die Dekorschicht ist meist eine bedruckte, thermoplastische Folie, die als Materialbasis ebenfalls PVC oder PP besitzt. Die Verschleißschicht ist im einfachsten Fall eine transparente, thermoplastische Folie (PVC oder PP).

Bei der Herstellung wird zunächst in einem Extruder der Träger hergestellt und direkt im Anschluss daran werden die Dekor- und die Verschleißfolie aufkalandriert. Die Oberflächenstruktur des Produktes wird durch die Strukturierung des Kalanders erzeugt. Je höher die gewünschte Verschleißklasse sein soll, umso dicker muss die Verschleißfolie sein. Dies führt nicht nur zu Kostennachteilen, sondern auch bei den höheren Verschleißklassen zu Transparenzproblemen.

Es ist auch bekannt, Paneele mit einer Oberflächenstruktur zu versehen, wobei auf eine Kunststoffträgerplatte eine thermoplastische Schicht aufgebracht wird, in welche unter Verwendung eines mechanischen Presselementes (wie z.B. einer Kurztaktpresse) nach Aufwärmen der thermoplastischen Schicht Strukturen eingebracht werden (DE 20 2011 110 956 U1).

Bei den bekannten Verfahren zur Herstellung von dekorierten Kunststoffpaneelen erfolgt somit zunächst immer die Dekorierung, bevorzugt mit einem Dekorpapier, und erst im Anschluss das Einbringen einer Struktur in das Dekor. Nachteilig ist, dass bei der Verwendung von bereits mit einem Dekorpapier versehenen Trägerplatten ein erheblicher Einstellaufwand zum Ausgleich des durch Bedrucken und Verpressens hervorgerufenen undefinierten Papierwachstums notwendig ist, um Dekor und Struktur synchron zueinander verlaufen zulassen. Auch ist der optische und haptische Eindruck der strukturierten Oberfläche unzureichend.

Aus der EP 1 820 640 B1 ist bekannt, Holzwerkstoffplatten mit einer dekosrsynchronen Struktur herzustellen, wobei in die Oberseite der Holzwerkstoffträgerplatte zunächst eine Struktur und/oder ein Relief eingeprägt wird, auch welches anschließend das Dekor aufgedruckt wird. In diesem Falle wird eine flächige Struktur in eine fertig ausgehärtete Holzfaser- bzw. Holzwerkstoffplatte unter Verwendung von Pressblechen eingeprägt. Holzwerkstoffplatten enthalten neben Holzfasern typischerweise duroplastische Harze (z.B. Melamin-Formaldehydharze), so dass beim Prägen von Holzwerkstoffplatten ein sog. "spring back" Effekt zu beobachten ist.

Der vorliegenden Erfindung liegt nun die technische Aufgabe zu Grunde ein Verfahren zur Herstellung eines (thermoplastischen) SPC-Fußbodenbelages bereitzustellen, bei dem die Oberfläche der Kunststoffträgerplatte effizienter strukturiert und veredelt wird. Dabei sollen sich die technischen Eigenschaften nicht verschlechtern und auch keine anderweitigen Produktverschlechterungen auftreten. Auch die Produktivität der Produktionslinie soll durch das Verfahren nicht beeinträchtigt werden.

Die gestellte Aufgabe wird erfindungsgemäß durch ein Verfahren mit den Merkmalen des Anspruchs 1, und ein Paneel mit den Merkmalen des Anspruchs 12 gelöst.

Demnach wird ein Verfahren zur Herstellung eines mehrschichtigen, oberflächenstrukturierten Paneels, insbesondere eines mehrschichtigen, oberflächenstrukturierten Fußbodenpaneels, bereitgestellt, welche die folgenden Schritte umfasst:
- Bereitstellen von mindestens einer Kunststoffträgerplatte, insbesondere in Form eines Endlosstrangs, wobei die Kunststoffträgerplatte aus mindestens zwei voneinander verschiedenen Kunststoffmischungen mittels Co-Extrusion herstellbar ist;
- Einbringen von Oberflächenstrukturen auf mindestens eine Seite der Kunststoffträgerplatte mittels Prägen;
- Aufbringen von mindestens einer Grundierung auf die strukturierte Oberfläche der Kunststoffträgerplatte;
- Bedrucken der Kunststoffträgerplatte im Direktdruck unter Ausbildung einer Dekorschicht;
- Aufbringen von einer Verschleißschutzschicht enthaltend abriebfeste Partikel, wobei die aufgebrachte Verschleißschutzschicht mindestens eine erste Abdeckschicht aus einem Hotcoating, abriebfeste Partikel und mindestens eine zweite Abdeckschicht aus einem Hotcoating umfasst;
- Aufbringen von mindestens einer Lackschicht; und
- Aushärten des Schichtaufbaus.

Die Herstellung der Kunststoffträgerplatte kann dem obigen Verfahren vorgeschaltet sein. Dabei wird die Kunststoffträgerplatte zunächst als Endlosstrang bereitgestellt und ggfs. anschließend auf Format geschnitten.

Die Kunststoffträgerplatte (bzw. der SPC-Kern) kann aus verschiedenen thermoplastischen Kunststoffen, wie Polyvinylchlorid (PVC) oder Polypropylen (PP), bestehen, wobei PVC der bevorzugte Kunststoff ist.

Generell kann eine Kunststoffträgerplatte zunächst als Endlosstrang durch Extrusion einer Mischung enthaltend PVC, Kalkstein und optionalen Hilfsstoffen hergestellt werden.

Die zu extrudierende Mischung kann in verschiedenen Alternativen bereitgestellt werden. In einer Variante kann die zu extrudierenden Mischung in Form eines Pulvers vorgelegt werden, wobei die verschiedenen Inhaltsstoffe in einer Mischvorrichtung zu einem pulverförmigen Gemisch vermengt werden, welches nach einer optionalen Zwischenlagerung in die Extrudiervorrichtung eingeführt wird.

In einer anderen Variante wird die Mischung in Form eines Compounds bereitgestellt. Das Compound besteht aus den Einzelkomponenten, die schon einmal zusammen aufgeschmolzen waren und danach zu verarbeitungsfähigen Partikeln (z. B. Pellets) zerkleinert werden, die in die Extrudervorrichtung eingeführt werden. Entsprechend kann bei der Verwendung eines Compounds auf Mischvorrichtung, Zwischenbunker und Schmelzvorrichtung verzichtet werden,

In einer Variante besteht die zu extrudierende Mischung aus 20 - 40 Gew% PVC, bevorzugt 25-35 Gew% PVC, 60-80 Gew% Kalkstein, bevorzugt 65-75 Gew% Kalkstein und optional weitere Hilfsstoffe. Beispielsweise umfasst die zu extrudierende Mischung 65 Gew% Kalkstein (Kreide) und 35 Gew% PVC.

Wenn man von pulverförmigen Rohstoffen ausgeht, sollte die Korngröße des Kalksteins ähnlich wie die Korngröße des PVC-Pulvers sein. Dies erleichtert die Herstellung des Pulvergemischs und vermeidet Entmischungen bzw. Inhomogenitäten. Dies gilt natürlich auch für die Herstellung des Compounds.

Als Hilfsstoffe können Stabilisatoren, Wachse, Schmierstoffe, Trennmittel und weitere Hilfsstoffe zugefügt werden. Ein bevorzugter Stabilisator umfasst Ca-Zn und kann in einer Menge zwischen 1 und 3 Gew%, bevorzugt 2 Gew% der zu extrudierenden Mischung zugegeben werden. Als Wachse können PE-Wachse verwendet werden. Bevorzugt verwendete Trennmittels sind CPE-Trennmittel, die in einer Menge zwischen, 0,5 und 1,5 Gew%, bevorzugt 1 Gew% in der zu extrudierenden Mischung verwendet werden.

Die Abkürzung CPE steht für chlorinated polyethylene, ein Copolymer aus Ethylen und Vinylchlorid. Je nach Verhältnis der beiden Monomeren kann der Chlorgehalt, anders als beim PVC, im Polymer variieren. CPE wird u. a. als Mittel zur Erhöhung der Schlagzähigkeit verwendet.

Die Extrusion der Mischung erfolgt in einem Extruder unter Austragen eines plattenförmigen Stranges. Wie oben angeführt. wird die zu extrudierende Mischung aus PVC, CaCO₃ bzw. Kalkstein und weiteren Zusätzen entweder vorab durch Vermischen der pulverförmigen Inhaltsstoffe, Aufschmelzen des PVC und Abkühlen, oder als fertiges Compound bereitgestellt. Die zu extrudierende Mischung durchläuft anschließend einen mehrstufigen Extruder mit Zonen unterschiedlicher Temperatur, wobei eine teilweise Kühlung mit Wasser erfolgt. Das zu extrudierende Gemisch wird im Extruder unter Temperatur- und Scherkrafteinfluss zu einer "knetbaren" Masse elastifiziert. Aus dem Extruder wird ein plattenförmiger Strang (z.B. mit einer maximalen Breite von 1.400 mm) über eine Schlitzdüse auf eine Rollenbahn ausgetragen.

Erfindungsgemäß wird die Kunststoffträgerplatte aus mindestens zwei voneinander verschiedenen Kunststoffmischungen, insbesondere zwei voneinander verschiedenen PVC-Mischungen, mittels Co-Extrusion herstellgestellt.. Bei einer Co-Extrusion werden mehrschichtige Kunststoffträgerplatten hergestellt. So kann z.B. jeweils ein unterer dünner und ein oberer dünner PVC-Strang (bevorzugt SPC) über einen weiteren mittleren PVC-Strang, der leichter und damit kostengünstiger oder aufgeschäumt ausgeführt ist, miteinander verbunden werden.

In einer Ausführungsvariante wird die Kunststoffträgerplatte durch Co-Extrusion aus einer ersten PVC-Mischung und einer zweiten PVC-Mischung mit jeweils unterschiedlichen Mengen an Calciumcarbonat hergestellt. So kann der innere bzw. mittlere Strang aus einer flexiblen Schicht mit einem Verhältnis von PVC Pulver zu Calciumcarbonat von 1 : (0-1) bestehen, die bei Bedarf auch aufgeschäumt sein kann. Die äußeren Stränge können PVC Pulver und Calciumcarbonat in einem Verhältnis von 1 : (1,5-3) aufweisen.

In einer weiteren Ausführungsform ist vorgesehen, dass die Kunststoffträgerplatte durch Beimischen von Farbstoffpartikeln gefärbt vorliegt. Die Farbe der Trägerplatte kann durch die verwendeten Farbstoffpartikel weitgehend frei bestimmt werden. In einer besonders bevorzugten Ausführungsform kann die Kunststoffträgerplatte eine hellgraue Farbe aufweisen, so dass der hellgraue Untergrund unmittelbar als bedruckbare Basis dienen kann. Auf den Auftrag einer Weißgrundierung als Druckgrundlage, wie im Folgenden noch beschrieben, kann in diesem Falle verzichtet werden.

In einer Verfahrensvariante erfolgt das Prägen der Oberflächenstrukturen des thermoplastischen SPC-Systems mittels eines strukturierten Bleches, eines Strukturgebers (z.B. Papier, Folie), eines umlaufenden Strukturbandes oder einer strukturierten Walze, bevorzugt sind Walze oder Band. Die verwendeten Prägevorrichtungen (wie Blech, Band oder Walze) bestehen aus Metall oder weisen sonstige harte Beschichtungen auf, die zum Eindringen in einen plastisch verformbaren Kunststoff geeignet sind. Auch sind 3D-gedruckte Oberflächen vorstellbar, insbesondere, da die Strukturtiefen zum Teil sehr groß sind.

In einer bevorzugten Ausführungsform wird als Prägewerkzeig eine strukturierte Kalanderwalze verwendet. Die endgültige Formgebung (inklusive Strukturierung) der Platte bezüglich Dicke und Ebenheit erfolgt vorliegend erst nach dem Extruder in einer/mehreren Spalten von Kalanderwalzen, wobei die Strukturprägung bei gleichzeitigen Abkühlen der SPC-Trägerplatte erfolgt. Es wirkt ein linienförmiger Kontakt zwischen verformbarer Trägerplatte und strukturierter Kalanderwalze.

Nach dem Verlassen des Extruders weist die Kunststoffträgerplatte eine erhöhte Temperatur auf. Wie erläutert, vereinfacht diese Temperatur der Kunststoffträgerplatte den nachfolgenden Prägeschritt, da die Strukturen in die Oberfläche der Kunststoffträgerplatte mit einem verringerten Kraftaufwand eingebracht werden können.

Nach dem Prägen erfolgte eine Abkühlung der Kunststoffträgerplatte auf 20-40°C, um eine Rückbildung der Prägestrukturen zu verhindern. Der Abkühlvorgang kann innerhalb der Presse, in einer separaten Kühlstrecke oder durch Zwischenlagerung bei Raumtemperatur erfolgen.

Die eingebrachten Oberflächenstrukturen bzw. Prägestrukturen können Fugen, Relief und/oder Poren sein. Im Sinne der vorliegenden Anmeldung sind Fugen linienförmige Vertiefungen, die längs- und/oder quer zur Transportrichtung ausgeführt sein können und eine Tiefe von 0,2 bis 1,5 mm aufweisen, wobei die Form der Fuge variabel ist. Ein Relief umfasst flächige Strukturen mit einer Tiefe von 0,1 bis 0,5 mm. Poren wiederum sind feine Strukturen, die eine Strukturtiefe von 0,1 bis 0,3 mm aufweisen können. Relief und Poren können überlagerte Strukturen bilden.

Es ist auch möglich, dass die Struktur im Register parallel zu dem Dekor verläuft, so gennannte EIR-Struktur bzw. dekorsynchrone Struktur. Dieser Ansatz ermöglicht eine Deckungsgleichheit zwischen Struktur und Dekor für ein verbessertes Imitat eines Naturproduktes. Dazu werden Position und Geschwindigkeit zwischen der zu strukturierenden Trägerplatte und dem Strukturgeber (Walze und/oder Strukturgeberpapier) synchronisiert.

Im weiteren Prozess kann der Endlosstrang als solcher in einer Variante in die weiterverarbeitende Anlage zur Oberflächenveredelung aufgegeben werden. In einer anderen möglichen Variante kann der der Endlosstrang abgelängt werden. In diesem Fall wird der Endlosstrang in separate Halbformate geschnitten und die Halbformate als Kunststoffträgerplatte der Weiterverarbeitung zugeführt. Es ist auch möglich, die Halbformate als Quasi-Plattenstrang, d.h. Kante an Kante, in die weiterverarbeitende Anlage aufzugeben.

Die oberflächenstrukturierte Kunststoffträgerplatte wird wie folgt weiter oberflächenveredelt:
In einer Ausführungsvariante kann die Oberfläche der Kunststoffträgerplatte vor dem Bedrucken zur Verbesserung der Haftung der nachfolgenden Schichten vorbehandelt werden. Dies kann eine Reinigung mit Bürsten und/oder eine Plasma- oder Coronabehandlung sein.

Erfindungsgemäß wird in einem nächsten Schritt mindestens eine Grundierung als Haftvermittler auf die Kunststoffträgerplatte vor dem Bedrucken derselbigen aufgebracht. Diese Grundierung kann eine Primerschicht (z.B. UV-Lack) und/oder ein Hotmelt (oder Hotcoating) z.B. in Form eines Polyurethan-Hotmelts umfassen.

Wird ein Primer zur Grundierung verwendet, beträgt die Menge des aufgetragenen flüssigen Primers vorliegend zwischen 1 und 30 g/m², bevorzugt zwischen 5 und 20 g/m², insbesondere bevorzugt zwischen 10 und 15 g/m². Als Primer werden bevorzugt Verbindungen auf Polyurethanbasis verwendet.

Wie angeführt, ist es auch möglich anstelle oder zusätzlich zur Primerschicht vor dem Bedrucken ein Hotmelt (oder Hotcoating) z.B. in Form eines Polyurethan-Hotmelts auf die Oberfläche der Kunststoffträgerplatte oder auf die Primerschicht aufzubringen.

Sowohl Primer als auch Hotmelt können anorganische Farbpigmente enthalten und somit als weiße Grundierungsschicht für die anschließend aufzudruckende Dekorschicht dienen. Als Farbpigmente können weiße Pigmente wie Titandioxid TiO₂ verwendet werden. Weitere Farbpigmente können Calciumcarbonat, Bariumsulfat oder Bariumcarbonat sein.

Es ist ebenfalls denkbar, dass die Grundierung aus mindestens einer, bevorzugt aus mindestens zwei oder mehreren nacheinander aufgetragenen Lagen bzw. Aufträgen besteht, wobei die Auftragsmenge zwischen den Lagen bzw. Aufträgen gleich oder verschieden ist, d.h. die Auftragsmenge einer jeden einzelnen Lagen kann variieren.

Die Grundierung kann unter Verwendung einer Walze, insbesondere einer gummierten Walze, auf die Oberfläche der Kunststoffträgerplatte aufgebracht werden.

In einer bevorzugten Ausführungsvariante wird auf die Grundierung ein Weißgrund mittels Digitaldruck auf die Kunststoffträgerplatte aufgebracht. Die für das digitale Drucken des Weißgrundes verwendeten Digitaldrucktinten basieren bevorzugt auf UV-Tinten, die mit weißen Farbpigmenten angereichert sind. Es ist aber auch möglich wasserbasierte Digitaldrucktinten oder so genannte Hybridtinten zu verwenden. Ein Auftrag mittels Digitaldruck ist vorteilhaft, da die Druckanlage deutlich kürzer ist als eine Walzvorrichtung und somit Platz, Energie und Kosten spart.

Die Oberfläche der Kunststoffträgerplatte kann demnach in unterschiedlicher Weise für den anschließenden Druckvorgang vorbereitet werden: In einer ersten Variante wird eine weiße Grundierung (Primer oder Hotcoating mit weißen Farbpigmenten) auf die Kunststoffträgerplatte aufgebracht. In einer zweiten Variante wird eine weiße Digitaldrucktinte aufgedruckt. Dies kann auch zusätzlich auf der (weißen) Grundierung erfolgen. In einer dritten Variante wird eine hellgraue Kunststoffträgerplatte verwendet, die bevorzugt keinen zusätzlichen Weißgrund erfordert. Aber auch in diesem Falle der Verwendung einer hellgrauen Kunststoffträgerplatte kann selbstverständlich eine (weiße) Grundierung und/oder einer weiße Digitaldrucktinte vor dem Bedrucken aufgebracht werden.

Erfindungsgemäß wird die Dekorschicht mittels Direktdruck aufgebracht.

In einer besonders bevorzugten Ausführungsform wird das mindestens eine Dekor mittels Digitaldruckverfahren auf die (oberflächenbehandelte und vorbeschichtete) Trägerplatte aufgebracht. Beim Digitaldruck wird das Druckbild direkt von einem Computer in eine Druckmaschine, wie zum Beispiel einen Laserdrucker oder Tintenstrahldrucker, übertragen. Dabei entfällt die Verwendung einer statischen Druckform.

Der Dekordruck erfolgt nach dem Inkjet-Prinzip im Single-Pass bei dem die gesamte Breite der zu bedruckenden Oberseite überspannt wird, wobei die Platten unter dem Drucker hindurch bewegt werden. Es werden 4 bis 5 Farben in separaten Druckkopfreihen aufgetragen, wobei je Farbe ein oder zwei Reihen Druckköpfe vorgesehen sind. Die Farben der Digitaldrucktinten sind beispielsweise schwarz, blau, rot, rötliches gelb, grünliches gelb, optional kann auch CMYK verwendet werden. Es ist aber auch möglich, dass die zu bedruckende Trägerplatte unter dem Drucker angehalten wird und dieser die Oberfläche beim Drucken mindestens einmal überfährt.

Die Digitaldrucktinten umfassen optional die gleichen Pigmente, die für analogen und/oder digitalen Druck mit wasserbasierten Tinten verwendet werden. Die Digitaldrucktinten basieren bevorzugt auf UV-Tinten. Es ist aber auch möglich wasserbasierte Digitaldrucktinten oder so genannte Hybridtinten zu verwenden. Nach dem Drucken erfolgt eine Trocknung und/oder Bestrahlung des Dekordrucks.

Die Druckfarben werden in einer Menge zwischen 1 und 30 g/m², bevorzugt zwischen 3 und 20 g/m², insbesondere bevorzugt zwischen 3 und 10 g/m² aufgebracht.

Erfindungsgemäß umfasst die auf die Dekorschicht aufgebrachte Verschleißschutzschicht mindestens eine erste Abdeckschicht, abriebfeste Partikel und mindestens eine zweite Abdeckschicht. Die Verschleißschutzschicht dient der Abdeckung des Dekors und sorgt mit dem aufgebrachten Korund für die Verschleißfestigkeit gegen Abrieb.

In einer Ausführungsvariante des vorliegenden Verfahrens erfolgt der Auftrag der Verschleißschutzschicht mit den folgenden Schritten:
- Aufbringen von mindesten einer ersten Abdeckschicht auf die aufgedruckte Dekorschicht;
- gleichmäßiges Aufstreuen von abriebfesten Partikeln auf die mindestens eine auf der Dekorschicht aufgetragene erste Abdeckschicht;
- Aufbringen von mindestens einer zweiten Abdeckschicht auf die Lage von aufgestreuten abriebfesten Partikeln.

Die erste Abdeckschicht wird auf die Dekorschicht als Flüssigauftrag aufgebracht und besteht erfindungsgemäß aus einer Hotcoating- bzw. Hotmelt-Schicht, kann aber auch aus einem UV-Lack bestehen, wobei der UV-Lack nicht von den Ansprüchen umfasst ist. Die Verwendung einer ersten Abdeckschicht ist von Vorteil, da eine verbesserte Haftung der anschließend aufgestreuten Partikel und der später aufgebrachten Schichten erreicht wird.

Als Hotcoating bzw. Hotmelt (Schmelzklebstoff) wird bevorzugt ein Polyurethan-Hotmelt (bzw. Polyurethan-Schmelzklebstoff verwendet). Der PUR-Hotmelt wird bei einer Applikationstemperatur von ca. 150°C aufgetragen. Der Einsatz von Polyurethan als Hotmelt hat noch den weiteren Vorteil, dass eine Nachvernetzung mit der Oberfläche der Kunststoffträgerplatte erfolgt, wodurch eine besonders gute Haftung auf der Oberfläche bewirkt wird. Die Auftragsmenge des Hotcoatings als erster Abdeckschicht liegt zwischen 20 und 50 g/m², bevorzugt 30 und 40 g/m².

Im Falle der nicht-beanspruchten Verwendung eines UV-Lackes; z.B. acrylathaltige Lacke, beträgt die Auftragsmenge der ersten Abdeckschicht zwischen 30-80 g/m², bevorzugt 40-70 g/m², besonders bevorzugt 50-60 g/m².

Auf die mindestens eine auf der Dekorschicht aufgetragene erste Abdeckschicht werden im Anschluss abriebfeste Partikel aufgestreut. Der Vorteil des Aufstreuens der abriebfesten Partikel ist, dass Menge und Verteilung gezielt und schnell eingestellt werden können und ein schneller Wechsel an unterschiedliche Produktanforderungen möglich ist.

Es ist aber auch vorstellbar, dass die abriebfesten Partikel nicht auf die erste Abdeckschicht aufgestreut werden, sondern zusammen mit der ersten Abdeckschicht aufgetragen werden. Dies ist insbesondere der Fall, wenn ein UV-Lack als erste Abdeckschicht verwendet wird.

In einer weiteren Ausführungsform des vorliegenden Verfahrens werden als abriebfeste Partikel, Partikel aus Korund (Aluminiumoxide), Borcarbide, Siliziumdioxide, Siliziumcarbide verwendet. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird. Korund weist eine ungleichmäßige Raumform auf.

Die Menge an aufgestreuten bzw. eingebrachten abriebfesten Partikeln beträgt 5 bis 50 g/m², bevorzugt 10 bis 30 g/m², insbesondere bevorzugt 15 bis 25 g/m². Die Menge der aufgebrachten abriebfesten Partikel hängt von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 25 g/m² bei Verwendung der Körnung F220. Im vorliegenden Fall weisen die fertigen Platten bevorzugt die Abriebklasse AC4 auf. Wobei die Prüfung nach der DIN EN 16511 - Mai 2014 Verfahren A oder B "Paneele für schwimmende Verlegung - Halbstarre, mehrlagige, modulare Bodenbeläge (MMF) mit abriebbeständiger Decklage" erfolgt.

Es werden abriebfeste Partikel mit Körnungen in den Klassen F180 bis F240. Die Korngröße der Klasse F180 umfasst einen Bereich von 53 - 90 µm, F220 von 45-75 µm, F230 34-82 µm, F240 28-70 µm (FEPA Norm). In einer besonders bevorzugten Ausführungsform werden Korundpartikel der Klasse F220 verwendet.

Die abriebfesten Partikel dürfen nicht zu feinkörnig sein (Gefahr der Staubbildung), aber auch nicht zu grobkörnig sein. Die Größe der abriebfesten Partikel stellt somit ein Kompromiss dar.

In einer weitergehenden Ausführungsform können silanisierte Korundpartikel verwendet werden. Typische Silanisierungsmittel sind Aminosilane. Die Silanisierung der Korundpartikel ermöglicht eine verbesserte Haftung ("Andocken") der Korundpartikel auf den vorgelegten Schichten.

Wie oben erwähnt, wird auf die Lage von aufgestreuten abriebfesten Partikeln mindestens eine zweite Abdeckschicht aufgebracht. Erfindungsgemäß besteht die mindestens eine zweite Abdeckschicht ebenfalls aus einem Hotcoating bzw. Hotmelt, z.B. einem PU-Hotmelt. Ein UV-Lack wäre auch möglich, was aber nicht von den Ansprüchen umfasst ist.

Die Menge der zweiten Abdeckschicht, welches auf die Lage aus aufgestreuten abriebfesten Partikeln aufgebracht wird, variiert in Abhängigkeit insbesondere von der Menge der auf das Druckdekor aufgebrachten ersten Abdeckschicht.

Im Falle der Verwendung eines Hotcoatings liegt die Menge des als zweite Abdeckschicht aufgetragenen Hotcoatings liegt in einem Bereich zwischen 20-50 g/m², bevorzugt 30 - 40 g/m².

Im Falle der nicht-beanspruchten Verwendung eines UV-Lackes beträgt die Auftragsmenge der zweiten Abdeckschicht zwischen 30-80 g/m², bevorzugt 40-70 g/m², besonders bevorzugt 50-60 g/m².

Es ergeben sich somit folgende Varianten für den Aufbau der Verschleißschutzschicht: erste Hotcoatingschicht- aufgestreute abriebfeste Partikel- zweite Hotcoatingschicht; erste UV-Lackschicht-aufgestreute abriebfeste Partikel - zweite UV-Lackschicht; in die erste UV-Lackschicht eingemischte abriebfeste Partikel -zweite UV-Lackschicht. Dabei ist nur die erste Variante erfindungsgemäß.

Auf die mindestens eine Verschleißschutzschicht, und hier insbesondere auf die zweite Abdeckschicht, wird anschließend die mindestens eine Lackschicht aufgebracht, wobei die mindestens eine Lackschicht aus einem Decklack mit Nanopartikeln z.B. Nanopartikel aus Kieselsäure, besteht.

Die mindestens eine Lackschicht dient der Verbesserung der Kratzfestigkeit und ggfs. Einstellung des Glanzgrades. Die Lackschicht besteht aus einem Decklack mit Nanopartikeln z.B. aus Kieselsäure. Der Lack, bevorzugt ein PU-Lack, kann in einer Menge zwischen 3 bis 50 g/m², bevorzugt 5 bis 30 g/m², insbesondere bevorzugt 10 bis 20 g/m² mittels weiterer Walzen aufgebracht werden.

Für den Decklack werden insbesondere strahlenhärtbare acrylathaltige Lacke verwendet. Typischerweise enthalten die verwendeten strahlenhärtbaren Lacke (Meth)acrylate, wie zum Beispiel Polyester(meth)acrylate, Polyether(meth)acrylate, Epoxy(meth)acrylate oder Urethan(meth)acrylate. Es ist auch denkbar, dass das verwendete Acrylat bzw. der acrylathaltige Lack substituierte oder unsubstituierte Monomere, Oligomere und/oder Polymere, insbesondere in Form von Acrylsäure-, Acrylether- und/oder Acrylsäureestermonomeren, -oligomeren oder -polymeren vorliegt. Von Bedeutung für das vorliegende Verfahren ist dabei die definitionsgemäße Präsenz eine Doppelbindung bzw. ungesättigten Gruppe im Acrylat-Molekül. Die Polyacrylate können auch weiterhin funktionalisiert vorliegen. Geeignete funktionelle Gruppen sind unter anderem Hydroxy-, Amino-, Epoxy- und/oder Carboxylgruppen. Die genannten Acrylate ermöglichen eine Vernetzung bzw. Aushärtung in Gegenwart von UV- bzw. Elektronenstrahlen (ESH).

Der Schichtaufbau wird abschließend getrocknet und ausgehärtet.

Die Strahlungshärtung erfolgt somit bevorzugt durch die Einwirkung von energiereicher Strahlung wie z.B. UV-Strahlung oder durch Bestrahlung mit energiereichen Elektronen. Als Strahlungsquellen dienen bevorzugterweise Laser, Hochdruckquecksilberdampflampen, Blitzlicht, Halogenlampen oder Excimerstrahler. Die üblicherweise zur Aushärtung bzw. Vernetzung ausreichende Strahlungsdosis liegt bei UV-Härtung im Bereich von 80-3000 mJ/cm². Gegebenenfalls kann die Bestrahlung auch unter Ausschluss von Sauerstoff d.h. in einer Inertgas-Atmosphäre durchgeführt werden. Bei Anwesenheit von Sauerstoff bildet sich Ozon, wodurch die Oberfläche matt wird. Geeignete Inertgase sind unter anderem Stickstoff, Edelgase oder Kohlendioxid. Das vorliegende Verfahren wird bevorzugt unter einer StickstoffAtmosphäre durchgeführt.

Die oberflächenveredelten Paneelformat können längs und quer auf Fräsautomaten profiliert werden, jedoch separat, um die Fräsabfälle wiederverwerten zu können.

In einer weiteren Ausführungsform des vorliegenden Verfahrens wird an zumindest zwei einander gegenüberliegenden Kanten des Paneels eine verriegelbare Nut-Feder-Verbindung eingebracht. Dies ermöglicht eine einfache und schnelle schwimmende Verlegung der Paneele. Derartige Nut-Feder-Verbindungen sind u.a. aus der EP 1 084 317 B1 bekannt.

Mit dem vorliegenden Verfahren ist somit die Herstellung eines mehrschichtigen, oberflächenstrukturierten Paneels möglich, welches den folgenden Aufbau (von unten nach oben) aufweist:
- mindestens eine oberflächenstrukturierte co-extrudierte Kunststoffträgerplatte, insbesondere
eine oberflächenstrukturierte PVC-Trägerplatte;
- mindestens eine Grundierung als Haftvermittler;
- mindestens eine im Direktdruck aufgedruckte Dekorschicht,
- mindestens eine auf der Dekorschicht vorgesehene Verschleißschutzschicht mit abriebfesten Partikeln, wobei die Verschleißschutzschicht mindestens eine erste Abdeckschicht aus einem Hotcoating, die abriebfesten Partikel und mindestens eine zweite Abdeckschicht aus einem Hotcoating umfasst;
- mindestens eine auf der Verschleißschutzschicht vorgesehene Lackschicht. Die Oberflächenstrukturen auf der Oberseite der Kunststoffträgerplatte sind bevorzugt Fugen,

Relief und/oder Poren. Wie oben bereits angemerkt, sind unter Fugen linienförmige Vertiefungen zu verstehen, die längs- und/oder quer zur Transportrichtung ausgeführt sein können und eine Tiefe von 0,2 bis 1,5 mm aufweisen, wobei die Form der Fuge variabel ist. Ein Relief umfasst flächige Strukturen mit einer Tiefe von 0,1 bis 0,5 mm. Poren sind feine Strukturen mit einer Strukturtiefe von 0,1 bis 0,3 mm. Relief und Poren können überlagerte Strukturen ausbilden.

Die abriebfesten und wasserfesten Paneele weisen eine Rohdichte zwischen 1500 und 3000 kg/m³, bevorzugt 2000 und 2500 kg/m³ auf. Die Gesamtschichtdicke der Paneele liegt unter 6 mm, zwischen 3 und 5 mm, bevorzugt 3 und 4,5 mm.

In einer Ausführungsform ist zwischen Grundierung und der aufgedruckten Dekorschicht ein Weißgrund vorgesehen.

Der Schichtaufbau wäre in dieser Ausführungsvariante (von unten nach oben gesehen):
- mindestens eine oberflächenstrukturierte co-extrudierte Kunststoffträgerplatte, insbesondere eine oberflächenstrukturierte PVC-Trägerplatte;
- mindestens eine Grundierung als Haftvermittler,
- mindestens ein Weißgrund;
- mindestens eine im Direktdruck auf den Weißgrund aufgedruckte Dekorschicht,
- mindestens ein auf der Dekorschicht vorgesehenes Hotcoating als erste Abdeckschicht;
- mindestens eine Lage von abriebfesten Partikeln auf der mindestens einen ersten Abdeckschicht;
- mindestens ein auf der Lage aus abriebfesten Partikeln vorgesehenes Hotcoating als zweite Abdeckschicht, und
- mindestens eine auf der zweiten Abdeckschicht vorgesehene Lackschicht.

In einer weiteren bevorzugten Ausführungsform weist das vorliegende Paneel den folgenden Schichtaufbau auf (von unten nach oben gesehen):
- mindestens eine oberflächenstrukturierte co-extrudierte PVC-Trägerplatte:
- mindestens ein Hotcoating als Grundierung,
- mindestens ein Weißgrund aus weißer Digitaldrucktinte;
- mindestens eine im Direktdruck auf den Weißgrund aufgedruckte Dekorschicht,
- mindestens ein auf der Dekorschicht vorgesehenes Hotcoating als erste Abdeckschicht;
- mindestens eine Lage von abriebfesten Partikeln auf dem Hotcoating als erster Abdeckschicht;
- mindestens ein auf der Lage aus abriebfesten Partikeln vorgesehenes zweites Hotcoating als zweite Abdeckschicht, und
- mindestens eine auf dem Hotcoating als zweiter Abdeckschicht vorgesehene Lackschicht.

In einer noch weiteren nicht-von den Ansprüchen umfassten Ausführungsform weist das vorliegende Paneel den folgenden Schichtaufbau auf (von unten nach oben gesehen):
- mindestens eine oberflächenstrukturierte PVC-Trägerplatte;
- mindestens ein Primer als Grundierung,
- mindestens ein Weißgrund aus weißer Digitaldrucktinte;
- mindestens eine im Direktdruck auf den Weißgrund aufgedruckte Dekorschicht,
- mindestens einen auf der Dekorschicht vorgesehenen UV-Lack als erste Abdeckschicht;
- mindestens eine Lage von abriebfesten Partikeln auf dem UV-Lack als erster Abdeckschicht;
- mindestens einen auf der Lage aus abriebfesten Partikeln vorgesehenen zweiten UV-Lack als zweite Abdeckschicht, und
- mindestens eine auf dem UV-Lack als zweiter Abdeckschicht vorgesehene Lackschicht.

Die nicht-beanspruchte Produktionslinie zur Durchführung des vorliegenden Verfahrens umfasst folgende Elemente:
- mindestens eine Vorrichtung zum Prägen einer Oberflächenstruktur in mindestens eine Seite einer Kunststoffträgerplatte;
- mindestens eine Auftragsvorrichtung zum Aufbringen von mindestens einer Grundierung auf die mindestens eine Kunststoffträgerplatte;
- mindestens einen Drucker zum Aufbringen von mindestens einer Dekorschicht;
- mindestens eine in Verarbeitungsrichtung hinter dem Drucker vorgesehene Vorrichtung zum Aufbringen von mindestens einer Verschleißschutzschicht;
- mindestens eine Vorrichtung zum Aufbringen einer Lackschicht.

In einer Variante der vorliegenden Produktionslinie kann der Herstellungsprozess für die Kunststoffträgerplatte vorgeschaltet sein. Dieser Teilabschnitt umfasst mindestens eine Mischvorrichtung zum Vermischen der Ausgangsstoffe für die Kunststoffträgerplatte in Verarbeitungsrichtung. In der Mischvorrichtung werden der thermoplastische Kunststoff, insbesondere PVC, Kalkstein und weitere Zusätze miteinander vermischt. In einer weitergehenden Variante umfasst der Teilabschnitt der Produktionslinie mindestens einen in Verarbeitungsrichtung hinter der Mischvorrichtung angeordneten Zwischenbunker zur Lagerung der Mischung aus Kunststoff, Kalkstein und weiteren Zusätzen. An den Zwischenbunker schließt sich in Verarbeitungsrichtung ein Extruder an. Es ist auch möglich, auf die Mischvorrichtung und Zwischenbunker zu verzichten. In diesem Fall wird ein fertiges Compound aus den Ausgangsstoffen (z.B. in Form von Pellets) bereitgestellt und in den Extruder eingeführt.

Die Mischung (Pulver oder Compound) wird im Extruder elastifiziert und durch ein Profil zur Ausbildung eines Endlosstranges (SPC-Strang) gepresst, welcher abgelängt (d.h. auf ein gewünschtes Format geschnitten) wird und die vereinzelten Formate als Trägerplatten vor Weiterverarbeitung abgestapelt werden.

Die mindestens eine Vorrichtung zum Prägen einer Oberflächenstruktur kann ein strukturiertes Blech, einen Strukturgeber (z.B. Papier, Folie), ein umlaufendes Strukturband oder eine strukturierte Walze umfassen. Bevorzugt sind Walze oder Band. Die verwendeten Prägevorrichtungen (wie Blech, Band oder Walze) bestehen aus Metall oder weisen sonstige harte Beschichtungen auf, die zum Eindringen in einen plastisch verformbaren Kunststoff geeignet sind.

Zur weiteren Oberflächenbearbeitung werden die oberflächenstrukturierten Trägerplatten vereinzelt und zunächst einer Vorbehandlung unterzogen, wie einer Plasma- oder Coronabehandlung. Die hierfür erforderlichen Vorrichtungen sind bekannt.

Wie oben erwähnt, wird ggfs. nach der Vorbehandlung eine Grundierung (z.B. Primer oder Hotmelt, ggfs. mit weißen Pigmenten angereichert) auf die Kunststoffträgerplatte aufgebracht. Die dafür verwendete Auftragsvorrichtung ist bevorzugt in Form eines Walzenaggregates ausgebildet.

Auf die Grundierung kann anschließend ein Weißgrund mittels eines Digitaldruckers aufgebracht werden.

In einer bevorzugten Ausführungsform wird zum Aufdrucken der Dekorschicht ebenfalls ein Digitaldrucker verwendet.

Die mindestens eine in Verarbeitungsrichtung hinter dem Drucker vorgesehene Vorrichtung zum Aufbringen von mindestens einer ersten Abdeckschicht auf die Dekorschicht ist bevorzugt in Form einer Walzenauftragsvorrichtung oder eines Sprühaggregates ausgebildet.

Die in der vorliegenden Produktionslinie vorgesehene Streuvorrichtung für die abriebfesten Partikel ist geeignet zum Streuen von Pulver, Granula, Fasern und umfasst ein oszillierendes Bürstensystem. Die Streuvorrichtung besteht im Wesentlichen aus einem Vorratstrichter, einer sich drehenden, strukturierten Walze und einem Abstreifer. Dabei wird über die Drehgeschwindigkeit der Walze die Auftragsmenge an abriebfesten Material bestimmt. Die Streuvorrichtung umfasst bevorzugt eine Stachelwalze.

In einer Ausführungsform der vorliegenden Produktionslinie ist zudem vorgesehen, dass die mindestens eine Streuvorrichtung von mindestens einer Kabine, die mit mindestens einem Mittel zum Entfernen von in der Kabine auftretenden Stäuben versehen ist, umgeben ist bzw. in dieser angeordnet ist. Das Mittel zum Entfernen der Stäube kann in Form einer Absaugvorrichtung oder auch als Vorrichtung zum Einblasen von Luft ausgebildet sein. Das Einblasen von Luft kann über Düsen erreicht werden, die am Plattenein- und auslauf installiert sind und Luft in die Kabine einblasen. Zusätzlich können diese verhindern, dass durch Luftbewegungen ein inhomogener Streuvorhang an abriebfesten Material entsteht.

Die Entfernung des Staubes aus abriebfesten Material aus der Umgebung der Streuvorrichtung ist vorteilhaft, da neben der offensichtlich gesundheitlichen Belastung für die an der Produktionslinie tätigen Arbeiter der Feinstaub aus abriebfesten Partikeln sich auch auf anderen Anlagenteilen der Produktionslinie ablegt und zu erhöhten Verschleiß der selbigen führt. Die Anordnung der Streuvorrichtung in einer Kabine dient daher nicht nur der Reduzierung der gesundheitlichen Staubbelastung der Umgebung der Produktionslinie, sondern beugt auch einem vorzeitigen Verschleiß vor.

Der Streuvorrichtung schließt sich in Verarbeitungsrichtung die Vorrichtung zum Aufbringen der mindestens einen zweiten Abdeckschicht, z.B. ein Hotcoating oder ein UV-Lack an, wobei diese ebenfalls als Walzenaggregat vorliegt.

Die abschließende Lackschicht wird ebenfalls unter Verwendung einer Walzenvorrichtung aufgebracht.

Den Auftragsvorrichtungen schließen sich in Verarbeitungsrichtung Vorrichtungen zum Aushärten des Schichtaufbaus an, wie Trockner und /oder Strahler.

Die Erfindung wird nachfolgend unter Bezugnahme auf die Figuren der Zeichnungen an einem Ausführungsbeispiel näher erläutert. Es zeigen:

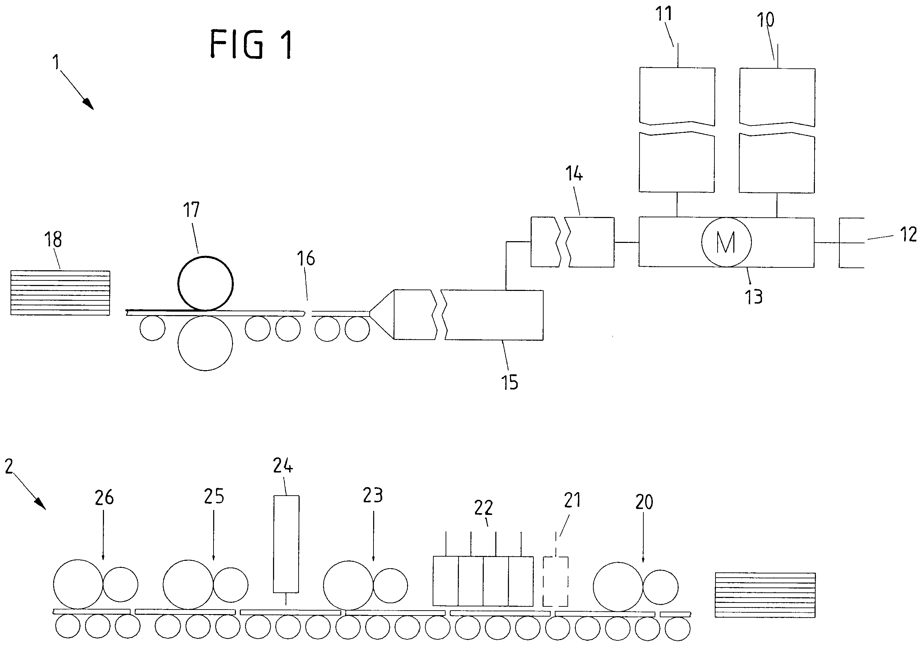

- Figur 1: eine schematische Darstellung einer Produktionslinie eines mehrschichtigen Paneels gemäß einer Ausführungsform des erfindungsgemäßen Verfahrens.

Die in Figur 1 schematisch dargestellte Produktionslinie umfasst einen ersten Teilabschnitt 1 zur Herstellung der Kunststoffträgerplatte und einen zweiten Teilabschnitt 2 zur Oberflächenbearbeitung der Kunststoffträgerplatte. Dabei wird im Teilabschnitt 1 der generelle Aufbau eines Extruders gezeigt. Erfindungsgemäß wird jedoch die Kunststoffträgerplatte durch Co-Extrusion hergestellt.

Teilabschnitt 1 umfasst zunächst einen Vorratsbehälter 10 für PVC-Pulver und einen Vorratsbehälter 11 für Kalkstein, die in der Mischvorrichtung 13 unter Zugabe von weiteren Hilfsstoffen 12 miteinander vermischt werden.

Diese pulverförmige Mischung aus PVC, Kalkstein (oder Kreide) und weiteren Zusätzen kann in einem Zwischenbunker 14 zwischengelagert werden. Der Zwischenbunker 14 ist in Verarbeitungsrichtung hinter der Mischvorrichtung angeordnet. An den Zwischenbunker 14 schließt sich in Verarbeitungsrichtung der Extruder 15 an.

Wie bereits diskutiert, kann auch direkt ein Compound aus den Einzelkomponenten in Pellet-Form als Ausgangskomponente für den Extruder 15 verwendet werden. In diesem Fall kann auf Vorratsbehälter 10, 11, 12, Mischvorrichtung 13, und Zwischenbunker 14 verzichtet werden.

Die Mischung (Pulver oder Compound) wird in die Extrudervorrichtung 15 zugeführt und durch ein Profil zur Ausbildung eines Endlosstranges (SPC-Strang) gepresst. Die Extrudervorrichtung 15 ist als mehrstufiger Extruder mit Zonen unterschiedlicher Temperatur ausgebildet, wobei eine teilweise Kühlung mit Wasser erfolgt. Aus dem Extruder wird ein plattenförmiger Strang (z.B. mit einer maximalen Breite von 1.400 mm) über eine Schlitzdüse auf eine Rollenbahn 16 ausgetragen.

Der noch warme Endlosstrang wird in eine Walzenvorrichtung 17 zum Prägen der Oberflächenstruktur eingeführt. Die Prägevorrichtung 17 weist eine strukturierte Walze auf, mit der Fugen, Reliefs und/oder Poren abgestimmt auf das spätere Dekor auf die Oberseite des Endlosstranges eingeprägt werden.

Im Anschluss wird der oberflächenstrukturierte Endlosstrang auf Format geschnitten und die Platten gestapelt (18).

Teilabschnitt 2 zur Oberflächenbearbeitung der Kunststoffträgerplatte beginnt mit einer Vereinzelung und Vorbehandlung der Trägerplatten, wie einer Plasma- oder Coronabehandlung (nicht gezeigt).

In einem nächsten Schritt wird mindestens eine Grundierung, bevorzugt ein UV-Lack als Primer bzw. Haftvermittler, auf die Oberfläche der Kunststoffträgerplatte unter Verwendung eines Walzenaggregats 20 aufgebracht.

Es schließt sich in der in Figur 1 gezeigten Ausführungsform ein Digitaldrucker 21 zum Auftrag eines Weißgrundes an, gefolgt von einem oder mehreren Digitaldruckern 22 zum Aufdrucken der Dekorschicht. Der Dekordruck erfolgt nach dem Inkjet-Prinzip im Single-Pass bei dem die gesamte Breite der zu bedruckenden Oberseite überspannt wird, wobei die Platten unter dem Drucker hindurch bewegt werden

Die mindestens eine in Verarbeitungsrichtung hinter dem Drucker 22 vorgesehene Vorrichtung zum Aufbringen eines nicht beanspruchten UV-Lackes als erster Abdeckschicht auf die Dekorschicht ist als Walzenauftragsvorrichtung 23 ausgebildet. Erfindungsgemäß wird statt des UV-Lackes ein Hotcoating aufgebracht.

Nach der Walzenauftragsvorrichtung 23 für die erste Abdeckschicht ist eine erste Streuvorrichtung 24 zum gleichmäßigen Aufstreuen des abriebfesten Materials wie z.B. Korund auf der Oberseite der Kunststoffträgerplatte vorgesehen. Als abriebfestes Material wird der Korund F220 eingesetzt, welches nach FEPA-Norm etwa 45-75 µm im Durchmesser misst. Die Streuvorrichtung 24 besteht im Wesentlichen aus einem Vorratstrichter, einer sich drehenden, strukturierten Stachelwalze und einem Abstreifer. Dabei wird über die Drehgeschwindigkeit der Streuwalze, die Auftragsmenge des Materials bestimmt. Auf die Platte wird je nach geforderter Abriebklasse des Produktes zwischen 12-25 g/m² Korund aufgestreut (AC4 (nach DIN EN 16511) = 20g/m²). Von der Stachelwalze aus fällt der Korund in einem Abstand von 5 cm auf die mit der Dekorfolie versehene Platte. Der Streuvorrichtung 24 schließt sich in Verarbeitungsrichtung die Vorrichtung 25 zum

Aufbringen eines nicht beanspruchten UV-Lackes als zweiter Abdeckschicht an. Erfindungsgemäß wird statt des UV-Lackes ein Hotcoating aufgebracht.

Die abschließende Lackschicht wird ebenfalls unter Verwendung einer Walzenvorrichtung 26 aufgebracht.

Den Auftragsvorrichtungen schließen sich in Verarbeitungsrichtung Vorrichtungen zum Aushärten des Schichtaufbaus an, wie Trockner und /oder Strahler (nicht gezeigt). Zur weiteren Konfektionierung sind geeignete Kühlungsvorrichtungen und Schneidvorrichtung vorgesehen (nicht gezeigt).

## Patentansprüche

1. Verfahren zur Herstellung eines mehrschichtigen, oberflächenstrukturierten Paneels, insbesondere eines mehrschichtigen, oberflächenstrukturierten Fußbodenpaneels, umfassend die Schritte:
- Bereitstellen von mindestens einer Kunststoffträgerplatte, insbesondere in Form eines Endlosstrangs, wobei die Kunststoffträgerplatte aus mindestens zwei voneinander verschiedenen Kunststoffmischungen mittels Co-Extrusion herstellbar ist;
- Einbringen von Oberflächenstrukturen auf mindestens eine Seite der Kunststoffträgerplatte mittels Prägen;
- Aufbringen von mindestens einer Grundierung auf die strukturierte Oberfläche der Kunststoffträgerplatte;
- Bedrucken der Kunststoffträgerplatte im Direktdruck unter Ausbildung einer Dekorschicht;
- Aufbringen von einer Verschleißschutzschicht enthaltend abriebfeste Partikel;
wobei die aufgebrachte Verschleißschutzschicht mindestens eine erste Abdeckschicht aus einem Hotcoating, abriebfeste Partikel und mindestens eine zweite Abdeckschicht aus einem Hotcoating umfasst;
- Aufbringen von mindestens einer Lackschicht; und
- Aushärten des Schichtaufbaus.

2. Verfahren nach Anspruch 1, **dadurch gekennzeichnet, dass** die Kunststoffträgerplatte aus einer ersten PVC-Mischung und einer zweiten PVC-Mischung mit jeweils unterschiedlichen Mengen an Calciumcarbonat mittels Co-Extrusion hergestellt wird.

3. Verfahren nach Anspruch 1, **dadurch gekennzeichnet, dass** die Kunststoffträgerplatte aus mindestens zwei voneinander verschiedenen PVC-Mischungen mittels Co-Extrusion herstellbar ist.

4. Verfahren nach einem der vorhergehenden Ansprüche, **dadurch gekennzeichnet, dass** die Kunststoffträgerplatte durch Beimischen von Farbstoffpartikeln gefärbt vorliegt.

5. Verfahren nach einem der vorhergehenden Ansprüche, **dadurch gekennzeichnet, dass** das Prägen der Oberflächenstrukturen mittels eines strukturierten Bleches, eines Strukturgebers, eines umlaufenden Strukturbandes oder einer strukturierten Walze erfolgt.

6. Verfahren nach einem der vorhergehenden Ansprüche, **dadurch gekennzeichnet, dass** die Oberflächenstrukturen bzw. Prägestrukturen Fugen, Relief und/oder Poren sind.

7. Verfahren nach einem der vorhergehenden Ansprüche, **dadurch gekennzeichnet, dass** die vor dem Bedrucken auf die Oberfläche der Kunststoffträgerplatte aufzubringende Grundierung mindestens eine Primerschicht und/oder mindestens ein PU-Hotmelt umfasst.

8. Verfahren nach einem der vorhergehenden Ansprüche, **dadurch gekennzeichnet, dass** vor dem Bedrucken mindestens ein Weißgrund auf die Grundierung aufgebracht wird.

9. Verfahren nach einem der vorhergehenden Ansprüche, **dadurch gekennzeichnet, dass** mindestens eine Dekorschicht im Digitaldruck aufgebracht wird.

10. Verfahren nach einem der vorhergehenden Ansprüche, **dadurch gekennzeichnet, dass** als abriebfeste Partikel Partikel aus Korund, Borcarbide, Siliziumdioxide oder Siliziumcarbide verwendet werden.

11. Verfahren nach einem der vorhergehenden Ansprüche, **dadurch gekennzeichnet, dass** die mindestens eine Lackschicht aus einem UV-Decklack besteht.

12. Abriebfestes und wasserfestes mehrschichtiges Paneel herstellbar in einem Verfahren nach einem der vorhergehenden Ansprüche umfassend:
- mindestens eine oberflächenstrukturierte co-extrudierte Kunststoffträgerplatte, insbesondere eine oberflächenstrukturierte PVC-Trägerplatte;
- mindestens eine Grundierung;
- mindestens eine im Direktdruck aufgedruckte Dekorschicht,
- mindestens eine auf der Dekorschicht vorgesehene Verschleißschutzschicht mit abriebfesten Partikeln; wobei die Verschleißschutzschicht mindestens eine erste Abdeckschicht aus einem Hotcoating, die abriebfesten Partikel und mindestens eine zweite Abdeckschicht aus einem Hotcoating umfasst;- mindestens eine auf der Verschleißschutzschicht vorgesehene Lackschicht.

## Claims

1. A method of manufacturing a multilayer surface-textured panel, in particular a multilayer surface-textured flooring panel, comprising the steps of:
- Providing at least one plastic carrier plate, in particular in the form of a continuous strand, wherein the plastic carrier plate can be produced from at least two different plastic mixtures by means of co-extrusion;
- Introducing surface structures on at least one side of the plastic carrier plate by means of embossing;
- Applying at least one primer to the textured surface of the plastic carrier plate;
- Direct printing of the plastic carrier plate with the formation of a decorative layer;
- Applying a wear protection layer containing abrasion-resistant particles; wherein the applied wear protection layer comprises at least a first cover layer of a hot coating, abrasion-resistant particles and at least a second cover layer of a hot coating;
- Applying at least one coat of lacquer; and
- Curing of the layer build-up.

2. Method according to claim 1, **characterised in that** the plastic carrier plate is produced from a first PVC mixture and a second PVC mixture, each with different amounts of calcium carbonate, by means of co-extrusion.

3. Method according to claim 1, **characterised in that** the plastic carrier plate can be produced from at least two mutually different PVC mixtures by means of co-extrusion.

4. Method according to any one of the preceding claims, **characterised in that** the plastic carrier plate is coloured by admixing dye particles.

5. Method according to any one of the preceding claims, **characterised in that** the embossing of the surface structures is carried out by means of a structured plate, a structure generator, a circulating structure band or a structured roller.

6. Method according to any one of the preceding claims, **characterised in that** the surface structures or embossed structures are joints, relief and/or pores.

7. Method according to any one of the preceding claims, **characterized in that** the primer be applied to the surface of the plastic carrier plate before printing comprises at least one primer layer and/or at least one PU hot melt.

8. Method according to any one of the preceding claims, **characterised in that** at least one white backgound is applied to the primer before printing.

9. Method according to any one of the preceding claims, **characterised in that** at least one decorative layer is applied by digital printing.

10. Method according to any one of the preceding claims, **characterized in that** particles of corundum, boron carbides, silicon dioxides or silicon carbides are used as abrasion-resistant particles.

11. Method according to any one of the preceding claims, **characterised in that** the at least one lacquer layer consists of a UV top lacquer.

12. An abrasion resistant and waterproof multilayer panel producible in a process according to any one of the preceding claims comprising:
- at least one surface-structured co-extruded plastic carrier plate, in particular a surface-structured PVC carrier plate;
- at least one primer;
- at least one decorative layer printed by direct printing,
- at least one wear resistant layer comprising abrasion resistant particles provided on said decorative layer; said wear resistant layer comprising at least a first covering layer of a hot coating, said abrasion resistant particles and at least a second covering layer of a hot coating;
- at least one lacquer layer provided on said wear resistant layer.

## Revendications

1. Procédé de fabrication d'un panneau multicouche structuré en surface, en particulier d'un panneau de revêtement de sol multicouche structuré en surface, comprenant les étapes :
- de fourniture d'au moins une plaque de support en matière plastique, en particulier sous la forme d'une barre sans fin, dans lequel la plaque de support en matière plastique peut être fabriquée à partir d'au moins deux mélanges de matière plastique différents l'un de l'autre au moyen d'une co-extrusion ;
- d'introduction de structures de surface sur au moins un côté de la plaque de support en matière plastique au moyen d'un estampage ;
- d'application d'au moins un apprêt sur la surface structurée de la plaque de support en matière plastique ;
- d'impression de la plaque de support en matière plastique lors de l'impression directe en réalisant une couche décorative ;
- d'application d'une couche de protection anti-usure contenant des particules résistantes à l'abrasion ;
dans lequel la couche de protection anti-usure appliquée comprend au moins une première couche de recouvrement composée d'un revêtement à chaud, des particules résistances à l'abrasion et au moins une deuxième couche de recouvrement composée d'un revêtement à chaud ;
- d'application d'au moins une couche de vernis ; et
- de durcissement de la structure stratifiée.

2. Procédé selon la revendication 1, **caractérisé en ce que** la plaque de support en matière plastique est fabriquée à partir d'un premier mélange en PVC et d'un deuxième mélange en PVC avec des quantités respectivement différentes de carbonate de calcium au moyen d'une co-extrusion.

3. Procédé selon la revendication 1, **caractérisé en ce que** la plaque de support en matière plastique peut être fabriquée à partir d'au moins deux mélanges de PVC différents l'un de l'autre au moyen d'une co-extrusion.

4. Procédé selon l'une quelconque des revendications précédentes, **caractérisé en ce que** la plaque de support en matière plastique se présente sous une forme colorée du fait d'un mélange de particules de colorant.

5. Procédé selon l'une quelconque des revendications précédentes, **caractérisé en ce que** l'estampage des structures de surface est effectué au moyen d'une tôle structurée, d'un structurant, d'une bande de structure périphérique ou d'un cylindre structuré.

6. Procédé selon l'une quelconque des revendications précédentes, **caractérisé en ce que** les structures de surface ou les structures d'estampage sont des joints, un relief et/ou des pores.

7. Procédé selon l'une quelconque des revendications précédentes, **caractérisé en ce que** l'apprêt à appliquer avant l'impression sur la surface de la plaque de support en matière plastique comprend au moins une couche primaire et/ou au moins une matière thermofusible à base de PU.

8. Procédé selon l'une quelconque des revendications précédentes, **caractérisé en ce qu'**au moins une base blanche est appliquée sur l'apprêt avant l'impression.

9. Procédé selon l'une quelconque des revendications précédentes, **caractérisé en ce qu'**au moins une couche décorative est appliquée lors de l'impression numérique.

10. Procédé selon l'une quelconque des revendications précédentes, **caractérisé en ce que** des particules composées de corindon, de carbures de bore, de dioxydes de silicium ou de carbures de silicium sont utilisées en tant que particules résistantes à l'abrasion.

11. Procédé selon l'une quelconque des revendications précédentes, **caractérisé en ce que** l'au moins une couche de vernis est constituée d'un vernis couvrant UV.

12. Panneau multicouche résistant à l'abrasion et imperméable pouvant être fabriqué lors d'un procédé selon l'une quelconque des revendications précédentes, comprenant :
- au moins une plaque de support en matière plastique co-extrudée structurée en surface, en particulier une plaque de support en PVC structurée en surface ;
- au moins un apprêt ;
- au moins une couche décorative imprimée lors de l'impression directe,
- au moins une couche de protection anti-usure prévue sur la couche décorative avec des particules résistantes à l'abrasion ; dans lequel la couche de protection anti-usure comprend au moins une première couche de recouvrement composée d'un revêtement à chaud, les particules résistantes à l'abrasion et au moins une deuxième couche de recouvrement composée d'un revêtement à chaud ; - au moins une couche de vernis prévue sur la couche de protection anti-usure.
